(19) Europäisches Patentamt
European Patent Office
Office européen des brevets

(11) **EP 2 217 902 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **08855308.6**

(22) Anmeldetag: **27.11.2008**

(51) Int Cl.:
***G01M 3/22*** *(2006.01)*

(86) Internationale Anmeldenummer:
**PCT/EP2008/066346**

(87) Internationale Veröffentlichungsnummer:
**WO 2009/068614 (04.06.2009 Gazette 2009/23)**

(54) **VERFAHREN UND VORRICHTUNG ZUR DICHTHEITSPRÜFUNG**

METHOD AND DEVICE FOR TIGHTNESS TESTING

PROCÉDÉ ET DISPOSITIF DE CONTRÔLE D'ÉTANCHÉITÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.12.2007 DE 102007057944**

(43) Veröffentlichungstag der Anmeldung:
**18.08.2010 Patentblatt 2010/33**

(60) Teilanmeldung:
**14150166.8 / 2 720 023**

(73) Patentinhaber: **Inficon GmbH**
**50968 Köln (DE)**

(72) Erfinder: **WETZIG, Daniel**
**50999 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**WO-A-2005/054806    US-A- 3 585 845**
**US-A- 4 984 450    US-A- 5 447 055**
**US-A1- 2005 223 779**

**Beschreibung**

Die Erfindung betrifft ein Verfahren zur Dichtheitsprüfung, bei welchem ein mit Prüfgas gefüllter Prüfling in eine Prüfkammer eingesetzt wird, und bei welchem ein Gasgemisch aus einem aus der Prüfkammer abgezogenen Prüfgas und einem Trägergas mit einem Prüfgassensor auf Prüfgas untersucht wird.

Ein bekanntes Verfahren zur integralen Dichtheitsprüfung sieht vor, dass der mit Prüfgas gefüllte Prüfling in eine Prüfkammer gelegt wird. Die Prüfkammer wird mit einem Vakuumsystem evakuiert, wobei im Vakuumsystem ein Prüfgassensor integriert ist. Ein typisches Prüfgas ist Helium, das bisher unter Verwendung eines Massenspektrometers nachgewiesen wird. Zum Nachweis von Helium sind Hochvakuumbedingungen erforderlich, wobei der Druck p weniger als $10^{-4}$ mbar betragen muss.

Dichtheitsprüfsysteme haben eine Zeitkonstante, die normalerweise vom Anwendungsfall bestimmt wird. Die Zeitkonstante gibt die Zeit, bis zu der stabile Signalbedingungen erreicht werden, an. Sie wird durch das Prüfkammervolumen und das Prüfgassaugvermögen an der Prüfkammer bestimmt:

$$\tau = V / S$$

$\tau$ :     Systemzeitkonstante (63%-Zeit)
V:     Volumen der Prüfkammer
S:     Saugvermögen der Pumpe für das Prüfgas

Die kleinste Leckrate, die mit einer Anlage gemessen werden kann, ist von dem kleinsten Prüfgaspartialdruck, der vom System nachgewiesen werden kann, abhängig. Der in der jeweiligen Applikation herrschende Prüfgasdruck ist wie folgt gegeben:

$$p = Q / S$$

p:     Partialdruck des Prüfgases
Q:     Leckrate des Prüfgases aus dem Prüfling
S:     Saugvermögen der Pumpe für das Prüfgas

Hier ist ein Widerspruch gegeben: Es kann nicht gleichzeitig der Prüfgaspartialdruck erhöht und die Zeitkonstante reduziert werden. Ein großes Prüfgassaugvermögen reduziert zwar die Signalreaktionszeit, jedoch ebenfalls den Prüfgasdruck und damit die Systemempfindlichkeit.

In WO 2005/054806 A1 (Sensistor) ist ein Vakuumprüfsystem nach dem Oberbegriff Anspruchs 1 beschrieben, bei dem ein mit Prüfgas gefüllter Prüfling in eine Prüfkammer eingeführt wird. Der Prüfkammer wird außerdem ein Trägergas zugeführt. Wenn am Prüfling ein Leck vorhanden ist, gelangt Prüfgas in den Trägergasstrom und wird mit diesem zu einer verdichtenden Pumpe abgeführt. An den Auslass der Pumpe ist ein Prüfgassensor angeschlossen, welcher unter Atmosphärendruck arbeitet. Unter Anwendung des Trägergasverfahrens wird der Prüfgaspartialdruck des verdichteten Gasgemisches hinter der Pumpe gemessen. Damit kann eine hohe Systemempfindlichkeit erreicht werden, weil der Prüfgaspartialdruck des verdichteten Gases hinter der Pumpe hoch ist. Die Verdichterpumpe erhöht den Totaldruck, der in der Prüfkammer bzw. im Innern des Prüflings herrscht, am Pumpenauslass auf 1000 mbar.

In US 5,447,055 ist ein Verfahren zur automatischen Erdgasanalyse unter Verwendung eines Gaschromatographen beschrieben. Das aus einem Tank durch Sonden hindurch entweichende Erdgas wird mit Hilfe einer Vakuumpumpe in eine Probenschleife eingeführt. Diese gibt jeweils eine Ladung Erdgas an den Graschromatographen ab. Eine ein Trägergas liefernde Gasquelle dient dazu, dass in der Schleife befindliche Erdgas dem Gaschromatographen zuzuführen. Das Trägergas dient also zum ventilgesteuerten Pumpen des Erdgases zum Gaschromatographen.

Der Erfindung liegt die Aufgabe zugrunde, ein Verfahren zur Dichtheitsprüfung anzugeben, bei dem die Menge des benötigten Trägergases verringert ist.

Die Erfindung ist im Patenanspruch 1 definiert. Hiernach wird das Trägergas dem Strom des Prüfgases hinter der den Prüfling enthaltenden Prüfkammer zugeführt.

Das Trägergas kann beispielsweise einer im Strom des Prüfgases an die Prüfkammer anschließenden ersten Pumpe zugeführt werden oder zwischen einer ersten Pumpe und einer nachfolgenden zweiten Pumpe.

Mit der Erfindung wird eine hohe Empfindlichkeit der Prüfgasdetektion erreicht, wobei der Trägergasstrom gering gehalten wird.

Bei der Erfindung wird generell das Trägergasverfahren angewandt, wobei der Prüfgaspartialdruck des verdichteten Gasgemisches hinter der das Gas komprimierenden Fördereinheit gemessen wird. Damit kann eine hohe Systemempfindlichkeit erreicht werden, weil der Prüfgaspartialdruck des verdichteten Gases hoch ist. Das erfindungsgemäße Verfahren setzt voraus, dass der Prüfgassensor den Partialdruck des Prüfgases unabhängig vom Totaldruck des Gasgemisches nachweisen kann. Solche selektiven Partialdrucksensoren, die den Partialdruck unabhängig vom Totaldruck messen, sind bekannt, beispielsweise als Quarzfenstersensor.

Die Verdichterpumpe erhöht den Totaldruck, der der Prüfkammer bzw. im Innern des Prüflings herrscht, am Pumpenauslass auf 1.000 mbar. Das Verhältnis zwischen dem Druck vor und dem Druck hinter der Pumpe ist das Kompressionsverhältnis. Beim Kompressionsschritt bleibt die Konzentration im Fördermedium erhalten. Also steigt mit der Kompression der Prüfgaspartialdruck im geförderten Gasgemisch um das Kompressionsverhältnis.

Die optimale Empfindlichkeit wird erreicht, wenn der zum Sensor geführte Gasstrom den Trägergasstrom nicht übersteigt und der Trägergasstrom möglichst gering gewählt wird. Gegebenenfalls kann mittels eines Kompressors das geförderte Gas weiter verdichtet werden, so dass der Totaldruck über 1.000 mbar liegt. Dadurch wird auch der Prüfgaspartialdruck weiter erhöht.

Die Erfindung ermöglicht eine schnelle Systemreaktionszeit (niedrige Zeitkonstante) bei gleichzeitig hoher Systemempfindlichkeit.

Der höhere Prüfgaspartialdruck kann zur Verbesserung der Nachweisgrenze des Systems oder zur Reduktion der Messzeit genutzt werden. Der Druck in der Prüfkammer kann beliebig weit reduziert werden, ohne dass dies Einfluss auf den Arbeitsdruck vor dem Prüfgassensor hinter der Verdichterpumpe hat. Damit ist es möglich, die Austauschzeit in der Prüfkammer durch Absenkung des Druckes zu reduzieren, ohne an Empfindlichkeit zu verlieren. Schließlich ist es möglich, durch Absenken des Arbeitsdrucks in der Prüfkammer bei gleichzeitig proportional abgesenktem Trägergasstrom die Empfindlichkeit des Nachweissystems zu erhöhen, ohne die Austauschzeit zu verschlechtern.

Als Prüfgas ist jegliche Gasart möglich, zu der ein vom Totaldruck unabhängiger Prüfgassensor existiert. Beispielsweise eignet sich als Prüfgas Helium oder Wasserstoff.

Als Trägergas kommen alle Gase in Betracht, auch solche, die mit einer konstanten Prüfgaskonzentration verunreinigt sind. Als Prüfgas eignen sich beispielsweise Stickstoff oder Luft.

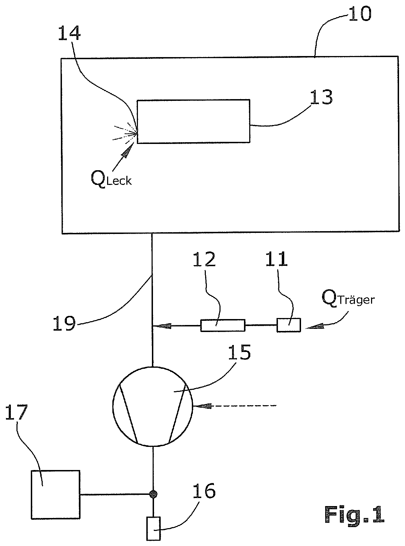

Im Folgenden wird ein Ausführungsbeispiel der Erfindung unter Bezugnahme auf Fig. 1 der Zeichnungen näher erläutert.

Es zeigen:

Fig. 1    eine schematische Darstellung des erfindungsgemäßen Verfahrens,

Fig. 2    eine schematische Darstellung eines anderen, nicht zur Erfindung gehörenden Verfahrens,

Fig. 3    eine schematische Darstellung eines abgewandelten Verfahrens nach Fig. 2 und

Fig. 4    eine ähnliche Ausführungsform wie in Fig. 3.

Bei der in Figur 1 dargestellten Variante ist eine Prüfkammer 10 vorgesehen, die vakuumdicht verschlossen ist.

In die Prüfkammer 10 ist ein Prüfling 13 eingebracht. Der Prüfling ist ein Hohlkörper, der auf Dichtheit zu prüfen ist. Zu diesem Zweck ist der Prüfling 13 mit einem Prüfgas gefüllt, beispielsweise mit Helium. Es sei angenommen, dass der Prüfling 13 ein Leck 14 habe, aus dem Prüfgas in die evakuierte Prüfkammer 10 hinein austritt. Der austretende Prüfgasstrom ist $Q_{Leck}$.

An die Prüfkammer 10 ist über eine Saugleitung 19 eine ansaugende Verdichterpumpe 15 zum Abfördern des Gases angeschlossen. Die Verdichterpumpe ist ein Kompressor, dessen Gasauslass 16 in die Atmosphäre führt und einen Totaldruck $p_{tot}$ = 1.000 mbar liefert. An die Saugleitung 19 ist ein Trägergaseinlass 11 angeschlossen, der mit einem Flusssensor 12 in Reihe geschaltet ist. Der Trägerstrom am Trägergaseinlass 11 ist mit $Q_{Träger}$ bezeichnet. In der Saugleitung 19 mischt sich das Prüfgas mit dem Trägergas, so dass ein Gasgemisch entsteht. Der Prüfgasanteil im Gasgemisch beträgt

$$c = \frac{Q_{Leck}}{Q_{Träger}}$$

Der Helium-Partialdruck $p_{He}$ ist

$$p_{He} = c * p_{tot}$$

Man erkennt, dass $p_{He}$ wegen des hohen Totaldrucks ebenfalls relativ hoch ist. Ein Prüfgassensor 17 ist an den Auslass der Verdichterpumpe 15 angeschlossen. Es handelt sich um einen Prüfgassensor, der bei Atmosphärendruck (1.000 mbar) arbeitet, beispielsweise um einen Heliumsensor der Marke "Wise Technology" der Anmelderin. Möglich ist auch ein strahlungsspektroskopischer Sensor, wie er beispielsweise in dem Lecksuchgerät HLD 5000 der Anmelderin verwendet wird oder ein chemischer Prüfgassensor. Ein derartiger Sensor ist in DE 10 2004 034 381 A beschrieben.

Das Saugvermögen S am Auslass der Prüfkammer 10 kann durch eine Hilfspumpe gesteigert werden, die an den Auslass angeschlossen ist und parallel zur Verdichterpumpe 15 arbeitet. Dadurch kann die Messzeit bzw. Reaktionszeit verkürzt werden, ohne dass die Empfindlichkeit verringert wird.

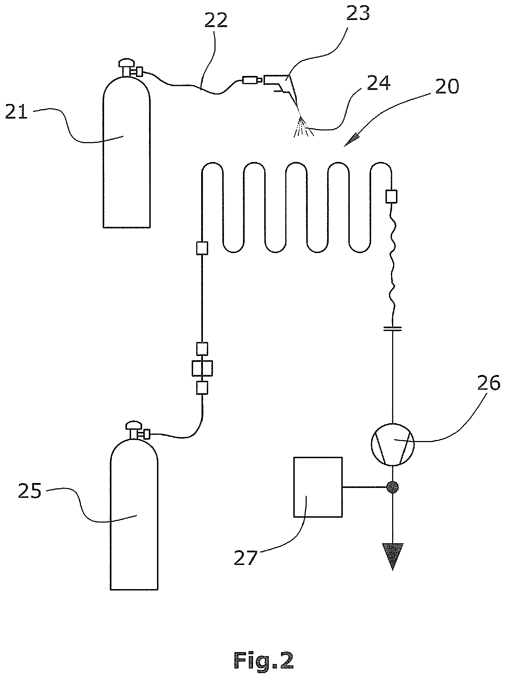

Figur 2 zeigt ein Beispiel, bei dem eine Prüfkammer nicht vorhanden ist. Der Prüfling 20 ist hier eine Rohrleitung, beispielsweise eine Rohrschlange, die auf Dichtheit zu prüfen ist. Zu diesem Zweck wird der evakuierte Prüfling 20 ohne umgebende Prüfkammer der äußeren Einwirkung eines Prüfgases ausgesetzt. Das Prüfgas, z. B. Helium (He), wird von einer Prüfgasquelle 21 über einen flexiblen Schlauch 22 einer Prüfgaspistole 23 zugeführt, die einen Sprühkegel 24 erzeugt, mit dem der Prüfling angesprüht wird. Dadurch wird an der Außenseite des Prüflings eine prüfgashaltige Atmosphäre erzeugt.

Das eine Ende des Prüflings 20 ist an eine Trägergasquelle 25 angeschlossen, die hier als Trägergas $N_2$ liefert. Das gegenüberliegende Ende des Prüflings ist an eine ansaugende Verdichterpumpe 26 angeschlossen, die einen Ausgangsdruck von 1.000 mbar erzeugt und in die Atmosphäre fördert. An den Auslass der Pumpe 26 ist auch hier ein Heliumsensor 27 angeschlossen, der dem Heliumsensor 17 des ersten Ausführungsbeispiels entspricht.

Die nachfolgende Tabelle gibt einen Vergleich eines üblichen Vakuumlecksuchverfahrens, bei dem der Prüfgassensor mit Vakuum arbeitet mit dem erfindungsgemäßen Trägergasverfahren, bei dem der Prüfgassensor an die Druckseite einer Verdichterpumpe angeschlossen ist:

| | Vakuumlecksuchverfahren | Trägergasverfahren (Erfindung) |
|---|---|---|
| **Zeitkonstante** | $\tau$ = V/S | $\tau$ = p*V/$Q_{Träger}$ |
| **Partialdruck** | $p_{He}$ = Q/S | $p_{He}$ = $P_{tot}$*c \| c = $Q_{Leck}$ / ($Q_{Träger}$ + $Q_{Leck}$) |
| | | |
| V = 1ltr. \| S = 1 l/s \| $Q_{Leck}$ = $1*10^{-8}$ mbar l/s \| $Q_{Träger}$ = 600 sccm \| p = 10 mbar | | |
| **Zeitkonstante** | $\tau$ = 1s | $\tau$ = 1s |
| **Partialdruck** | $p_{He}$ = $1*10^{-8}$ mbar | $p_{He}$ = $1*10^{-6}$ mbar ($p_{Sensor}$ = 1000 mbar) |

Aus der Tabelle ist erkennbar, dass der Prüfgas-Partialdruck bei dem Verfahren nach Fig. 2 unter Zugrundelegung der angegebenen Parameter um den Faktor 100 größer ist, so dass die Empfindlichkeit ebenfalls entsprechend gesteigert ist. Andererseits kann bei gleicher Empfindlichkeit die Zeitkonstante, die die Ansprechzeit angibt, verkürzt werden.

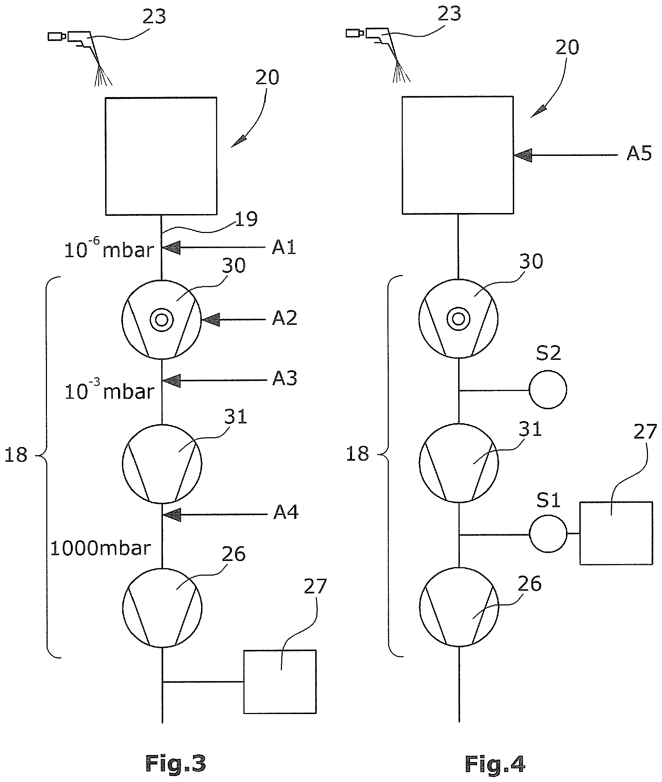

Bei dem Ausführungsbeispiel von Figur 3 ist der Prüfling 20 eine zu prüfende Kammer, die abdichtend verschließbar sein soll. Die Kammer wird mit einer Vakuumpumpe 30 evakuiert und mit einer Prüfgaspistole 23 wird außerhalb des Prüflings 20 eine Prüfgas enthaltende Atmosphäre erzeugt. Bei dem dargestellten Ausführungsbeispiel beträgt das Vakuum $10^{-6}$ mbar. Die Vakuumpumpe 30 ist Bestandteil einer Pumpenanordnung 18, die eine Reihenschaltung mehrerer Pumpen 30, 31 enthält. An den Auslass der Vakuumpumpe 30 ist die Vorvakuumpumpe 31 angeschlossen. Das Vorvakuum beträgt hier $10^{-3}$ mbar. Die Vorvakuumpumpe liefert das Gas unter Atmosphärendruck (1000 mbar). An den Auslass der Vorvakuumpumpe 31 ist bei dem dargestellten Ausführungsbeispiel eine Verdichterpumpe 26 angeschlossen, die das Gas noch über Atmosphärendruck verdichtet. An den Auslass der Verdichterpumpe 26 ist der Prüfgassensor 27 angeschlossen.

Das Trägergas muss nicht notwendigerweise der Saugleitung 19 mit dem Anschluss A1 zugeführt werden. Es kann auch in den Transportweg des abgesaugten Gases an beliebiger Stelle zugeführt werden, beispielsweise an einen Anschluss A2 der an dem Gehäuse der Vakuumpumpe 30 vorgesehen ist, oder an den Anschluss A3 am Auslass der Vakuumpumpe 30 oder an den Auslass A4 der Pumpe 31.

Das Ausführungsbeispiel von Figur 4 entspricht demjenigen von Figur 3, wobei der Trägergasanschluss A4 an dem Prüfling 20 vorgesehen ist. Der Prüfgassensor 27 kann an den Anschluss S1 oder den Anschluss S2 angeschlossen sein. Wichtig ist nur, dass er an oder vor der letzten Stufe der mehrstufigen Pumpenanordnung 18 angeordnet ist, so dass er das komprimierte Gasgemisch auswertet. Das Trägergas wird hier über den Anschluss A5 dem Prüfling 20 zugeführt, kann aber alternativ auch einem der Anschlüsse A1 bis A4 von Fig. 3 zugeführt werden.

**Patentansprüche**

1. Verfahren zur Dichtheitsprüfung, bei welchem ein mit Prüfgas gefüllter Prüfling (13) in eine Prüfkammer (10) eingesetzt wird und ein Strom von Prüfgas aus der Prüfkammer abgezogen wird, und bei welchem ein Gasgemisch aus dem aus der Prüfkammer abgezogenen Prüfgas und einem Trägergas mit einem Prüfgassensor (17) auf Prüfgas untersucht wird, wobei der Prüfgassensor (17) im Strom des Gasgemisches stromabwärts einer verdichtenden Pumpe (15, 30) angeordnet ist,
**dadurch gekennzeichnet,**
**dass** das Trägergas dem aus der Prüfkammer abgezogenen Strom des Prüfgases stromabwärts der Prüfkammer zugeführt wird.

2. Verfahren nach Anspruch 1, **dadurch gekennzeichnet, dass** das Trägergas an einer im Strom des Prüfgases an die Prüfkammer anschließenden ersten Pumpe zugeführt wird.

3. Verfahren nach Anspruch 1, **dadurch gekennzeichnet, dass** das Trägergas im Strom des Prüfgases zwischen einer an die Prüfkammer anschließenden ersten Pumpe und einer nachfolgenden zweiten Pumpe zugeführt wird.

**Claims**

1. A method for tightness testing, wherein a test object (13) filled with test gas is inserted into a test chamber (10) and a flow of a test gas is withdrawn from the test chamber, and wherein a gas mixture made of the test gas withdrawn from the test chamber and of a carrier gas is examined for the presence of test gas by use of a test gas sensor (17), said test gas sensor (17) being arranged in the flow of the gas mixture downstream of a condensing pump (15,30),
**characterized in that**
the carrier gas is supplied, downstream of the test chamber, to the flow of the test gas withdrawn from the test chamber.

2. The method according to claim 1, **characterized in that** the carrier gas is supplied at a first pump following the test chamber in the flow of the test gas.

3. The method according to claim 1, **characterized in that**, in the flow of the test gas, the carrier gas is supplied between a first pump following the test chamber and a subsequent second pump.

**Revendications**

1. Procédé de contrôle d'étanchéité selon lequel un échantillon à contrôler (13) est inséré dans une chambre de contrôle (10) et en qu'un flux de gaz de contrôle est évacué de la chambre de contrôle, et selon lequel un mélange de gaz à partir du gaz de contrôle évacué de la chambre de contrôle et d'un gaz porteur est examiné avec un capteur de gaz de contrôle (17) pour détecter du gaz de contrôle, le capteur de gaz de contrôle (17) étant disposé dans le flux du mélange de gaz en aval d'une pompe de compression (15, 30),
**caractérisé en ce que**
le gaz porteur est introduit dans le flux de gaz de contrôle évacué de la chambre de contrôle en aval de la chambre de contrôle.

2. Procédé selon la revendication 1, **caractérisé en ce que** le gaz porteur est introduit à une première pompe suivant, dans le flux de gaz de contrôle, à la chambre de contrôle.

3. Procédé selon la revendication 1, **caractérisé en ce que** le gaz porteur est introduit, dans le flux de gaz de contrôle, entre une première pompe suivant à la chambre de contrôle et une seconde pompe suivante.

**Fig.1**

**Fig.2**

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005054806 A1
- US 5447055 A
- DE 102004034381 A